# EUROPÄISCHE PATENTSCHRIFT

(11) **EP 2 035 468 B1**
(45) Veröffentlichungstag und Bekanntmachung des Hinweises auf die Patenterteilung: **24.02.2010**
(21) Anmeldenummer: 07765477.0
(22) Anmeldetag: 19.06.2007
(51) Int. Cl.: C08F 6/14, C08J 3/03

(54) **VERFAHREN ZUR HERSTELLUNG EINER WÄSSRIGEN POLYMERISATDISPERSION**
METHOD FOR PRODUCING AQUEOUS POLYMER DISPERSION
PROCÉDÉ DE PRODUCTION D'UNE DISPERSION DE POLYMÈRES AQUEUSE

(30) Priorität: 26.06.2006 EP 06116062
(43) Veröffentlichungstag der Anmeldung: 18.03.2009
(73) Patentinhaber: BASF SE, 67056 Ludwigshafen (DE)
(72) Erfinder: MANDERS, Lambertus, 67063 Ludwigshafen (DE); GUBAYDULLIN, Ilshat, 67061 Ludwigshafen (DE); GASCHLER, Wolfgang, 67063 Ludwigshafen (DE)
(86) Internationale Anmeldenummer: PCT/EP2007/056042
(87) Internationale Veröffentlichungsnummer: WO 2008/000649

(56) Entgegenhaltungen:
- DE-A1- 4 007 637
- US-A- 3 374 143

## Beschreibung

Gegenstand der vorliegenden Erfindung ist ein Verfahren zur Herstellung einer wässrigen Polymerisatdispersion mit einem Polymerisatfeststoffgehalt von X Gew.-% durch radikalisch initiierte wässrige Emulsionspolymerisation in einem Polymerisationsgefäß, welches dadurch gekennzeichnet ist, dass im Polymerisationsgefäß durch die radikalisch initiierte wässrige Emulsionspolymerisation eine wässrige Polymerisatdispersion mit einem Polymerisatfeststoffgehalt von X+Y Gew.-% hergestellt wird, diese wässrige Polymerisatdispersion in einen Behälter überführt wird, das Polymerisationsgefäß mit Wasser gespült wird und das erhaltene Spülwasser zur Verdünnung der wässrigen Polymerisatdispersion im Behälter auf einen Feststoffgehalt von X Gew.-% verwendet wird.

Wässrige Polymerisatdispersionen sind allgemein bekannt. Es handelt sich dabei um fluide Systeme, die als disperse Phase in wässrigem Dispergiermedium aus mehreren ineinander verschlungenen Polymerisatketten bestehenden Polymerisatknäuel, die sogenannte Polymermatrix oder Polymerisatpartikel, in disperser Verteilung befindlich enthalten. Der mittlere Durchmesser der Polymerisatpartikel liegt häufig im Bereich von 10 bis 1000 nm, insbesondere im Bereich von 50 bis 600 nm. Wässrige Polymerisatdispersionen werden in einer Vielzahl von technischen Anwendungen als Bindemittel eingesetzt, beispielsweise in Anstrichfarben oder Putzen, in Leder-, Papier- oder Kunststofffolienbeschichtungen sowie als Komponenten in Klebern.

Wässrige Polymerisatdispersionen sind insbesondere durch radikalisch initiierte wässrige Emulsionspolymerisation von ethylenisch ungesättigten Monomeren zugänglich. Diese Methode ist vielfach vorbeschrieben und dem Fachmann daher hinreichend bekannt [vgl. z.B. Encyclopedia of Polymer Science and Engineering, Vol. 8, Seiten 659 bis 677, John Wiley & Sons, Inc., 1987; D.C. Blackley, Emulsion Polymerisation, Seiten 155 bis 465, Applied Science Publishers, Ltd., Essex, 1975; D.C. Blackley, Polymer Latices, 2nd Edition, Vol. 1, Seiten 33 bis 415, Chapman & Hall, 1997; H. Warson, The Applications of Synthetic Resin Emulsions, Seiten 49 bis 244, Ernest Benn, Ltd., London, 1972; D. Diederich, Chemie in unserer Zeit 1990, 24, Seiten 135 bis 142, Verlag Chemie, Weinheim; J. Piirma, Emulsion Polymerisation, Seiten 1 bis 287, Academic Press, 1982; F. Hölscher, Dispersionen synthetischer Hochpolymerer, Seiten 1 bis 160, Springer-Verlag, Berlin, 1969 und die Patentschrift DE-A 40 03 422]. Die radikalisch initiierte wässrige Emulsionspolymerisation erfolgt üblicherweise dergestalt, dass man wenigstens ein ethylenisch ungesättigtes Monomer, häufig unter Mitverwendung von Dispergierhilfsmitteln, in wässrigem Medium dispers verteilt und mittels wenigstens eines radikalischen Polymerisationsinitiators polymerisiert. Dabei werden die wässrigen Polymerisatdispersionen in der Regel mit dem Polymerisatfeststoffgehalt hergestellt, mit welchem die gebrauchsfertigen wässrigen Polymerisatdispersionen an die Kunden abgegeben bzw. selbst weiterverarbeitet werden.

Die Durchführung der radikalisch initiierten wässrigen Emulsionspolymerisation erfolgt insbesondere im industriellen Maßstab in der Regel semikontinuierlich in apparativ sowie mess- und regeltechnisch aufwendig ausgestatteten - und somit teuren - Polymerisationsgefäßen, den sogenannten Polymerisationsreaktoren, weswegen für diese Reaktoren kurze Zykluszeiten bzw. hohe Raum/Zeitausbeuten angestrebt werden. Dies wird insbesondere dadurch erzielt, dass in Kampagnen produziert wird, d.h. nach identischer Herstellvorschrift werden wässrige Polymerisatdispersionen gleicher Zusammensetzung nacheinander hergestellt und zur weiteren Bearbeitung, insbesondere zur Nachpolymerisation und zur Entfernung leichtflüchtiger organischer Bestandteile, in einen technisch einfacher ausgestatteten Reaktionsbehälter, beispielsweise einem sogenannten blow-down-Reaktor, Konfektionier- oder Strippbehälter überführt. Um dabei möglichst kurze Zykluszeiten im Polymerisationsreaktor zu erzielen, wird der Polymerisationsreaktor zwischen den einzelnen Chargen einer Kampagne, d.h. nach vollständiger Entleerung des Polymerisationsreaktors der vorhergehenden Charge und der Vorlage von Teil- oder Gesamtmengen einzelner Einsatzstoffe der nächsten Charge, in der Regel nicht gereinigt. Wenn überhaupt, wird der Polymerisationsreaktor zwischen den einzelnen Kampagnen, d.h. beim Produktwechsel zu einer anderen wässrigen Polymerisatdispersion, welche beispielsweise eine andere Polymerisatzusammensetzung aufweist und daher nach einer anderen Herstellvorschrift hergestellt wird, gereinigt. Dabei erfolgt die Reinigung in der Regel dergestalt, dass der Polymerisationsreaktor mit Wasser, häufig mittels fest installierter oder temporär eingesetzter Wassersprühköpfe, gespült wird. Das dabei anfallende Reinigungswasser enthält in geringen Mengen feinteilige Polymerisate und ist dem Fachmann als sogenanntes "Weißwasser" geläufig. Die bei der Reinigung bzw. Spülung von Anlagenteilen, insbesondere Polymerisationsreaktoren anfallenden Weißwasser, d.h. sehr verdünnte wässrige Polymerisatdispersionen, werden in der Regel ausgefällt und verbrannt, zum biologischen Abbau in das behandlungsbedürftige Abwasser gegeben oder in Einzelfällen kostspielig mittels Ultrafiltration aufkonzentriert [siehe hierzu beispielsweise EP-A 512736, EP-A 527386, WO 95/05344, US-B 6248809 sowie J. Zahka und L. Mir, Chem. Eng. Progr. 73 (1977), Seiten 53 bis 55]. Produktverluste oder erhöhte Aufarbeitungskosten sind die Folge. Desweiteren weisen die in Kampagnen hergestellten wässrigen Polymerisatdispersionen häufig unerwünschte Polymerisationskoagulate auf. Diese Polymerisationskoagulate mit einer Teilchengröße von wenigen Micrometern bis zu wenigen Zentimetern können die Klarheit der aus den wässrigen Polymerisatdispersionen erhaltenen Polymerisatfilme herabsetzen ("Stippen"), die Bindekraft der Polymerisate in Anstrich-, Putz-, Beschichtungs- oder Kleberformulierungen reduzieren oder zu störenden Ablagerungen in Produktionsanlagen und Verarbeitungsmaschinen führen.

Aufgabe der vorliegenden Erfindung war es daher, ein Verfahren zur Herstellung einer wässrigen Polymerisatdispersion bereitzustellen, welches kurze Zykluszeiten gewährleistet, Produktverluste und/oder Aufarbeitungskosten reduziert und/oder eine wässrige Polymerisatdispersion mit reduziertem Koagulatgehalt zur Verfügung stellt.

Demgemäss wurde das oben beschriebene Verfahren gefunden.

Zur Herstellung der wässrigen Polymerisatdispersionen kommt als wenigstens ein ethylenisch ungesättigtes Monomer insbesondere in einfacher Weise radikalisch polymerisierbare ethylenisch ungesättigte Verbindungen in Betracht, wie beispielsweise Ethylen, vinylaromatische Monomere, wie Styrol, α-Methylstyrol, o-Chlorstyrol oder Vinyltoluole, Vinylhalogenide, wie Vinylchlorid oder Vinylidenchlorid, Ester aus Vinylalkohol und 1 bis 18 C-Atome aufweisenden Monocarbonsäuren, wie Vinylacetat, Vinylpropionat, Vinyl-n-butyrat, Vinyllaurat und Vinylstearat, Ester aus vorzugsweise 3 bis 6 C-Atome aufweisenden α,β-monoethylenisch ungesättigten Mono- und Dicarbonsäuren, wie insbesondere Acrylsäure, Methacrylsäure, Maleinsäure, Fumarsäure und Itaconsäure, mit im allgemeinen 1 bis 12, vorzugsweise 1 bis 8 und insbesondere 1 bis 4 C-Atome aufweisenden Alkanolen, wie besonders Acrylsäure- und Methacrylsäuremethyl-, -ethyl-, -n-butyl-, -iso-butyl-, pentyl-, -hexyl-, -heptyl-, -octyl-, -nonyl-, -decyl- und -2-ethylhexylester, Fumar- und Maleinsäuredimethylester oder -di-n-butylester, Nitrile α,β-monoethylenisch ungesättigter Carbonsäuren, wie Acrylnitril, Methacrylnitril, Fumarsäuredinitril, Maleinsäuredinitril sowie C₄₋₈-konjugierte Diene, wie 1,3-Butadien und Isopren. Die genannten Monomere bilden in der Regel die Hauptmonomeren, die, bezogen auf die Gesamtmonomerenmenge, einen Anteil von mehr als 50 Gew.-%, bevorzugt mehr als 80 Gew.-% auf sich vereinen. In aller Regel weisen diese Monomeren in Wasser bei Normalbedingungen [20 °C, 1 atm (= 1,013 bar absolut)] lediglich eine mäßige bis geringe Löslichkeit auf.

Monomere, die unter den vorgenannten Bedingungen eine erhöhte Wasserlöslichkeit aufweisen, sind solche, die entweder wenigstens eine Säuregruppe und/oder deren entsprechendes Anion bzw. wenigstens eine Amino-, Amido-, Ureido- oder N-heterocyclische Gruppe und/oder deren am Stickstoff protonierten oder alkylierten Ammoniumderivate enthalten. Beispielhaft genannt seien α,β-monoethylenisch ungesättigte Mono- und Dicarbonsäuren und deren Amide, wie z.B. Acrylsäure, Methacrylsäure, Maleinsäure, Fumarsäure, Itaconsäure, Acrylamid und Methacrylamid, ferner Vinylsulfonsäure, 2-Acrylamido-2-methylpropansulfonsäure, Styrolsulfonsäure und deren wasserlösliche Salze sowie N-Vinylpyrrolidon, 2-Vinylpyridin, 4-Vinylpyridin, 2-Vinylimidazol, 2-(N,N-Dimethylamino)ethylacrylat, 2-(N,N-Dimethylamino)ethylmethacrylat, 2-(N,N-Diethylamino)ethylacrylat, 2-(N,N-Diethylamino)ethylmethacrylat, 2-(N-tert.-Butylamino)ethylmethacrylat, N-(3-N',N'-Dimethylaminopropyl)methacrylamid und 2-(1-Imidazolin-2-onyl)ethylmethacrylat. Im Normalfall sind die vorgenannten Monomeren lediglich als modifizierende Monomere in Mengen von weniger als 10 Gew.-%, bevorzugt weniger als 5 Gew.-%, bezogen auf die Gesamtmonomerenmenge, enthalten.

Monomere, die üblicherweise die innere Festigkeit der Verfilmungen der Polymermatrix erhöhen, weisen normalerweise wenigstens eine Epoxy-, Hydroxy-, N-Methylol- oder Carbonylgruppe, oder wenigstens zwei nicht konjugierte ethylenisch ungesättigte Doppelbindungen auf. Beispiele hierfür sind zwei Vinylreste aufweisende Monomere, zwei Vinylidenreste aufweisende Monomere sowie zwei Alkenylreste aufweisende Monomere. Besonders vorteilhaft sind dabei die Di-Ester zweiwertiger Alkohole mit α,β-monoethylenisch ungesättigten Monocarbonsäuren unter denen die Acryl- und Methacrylsäure bevorzugt sind. Beispiele für derartige zwei nicht konjugierte ethylenisch ungesättigte Doppelbindungen aufweisende Monomere sind Alkylenglykoldiacrylate und - dimethacrylate, wie Ethylenglykoldiacrylat, 1,2-Propylenglykoldiacrylat, 1,3-Propylenglykoldiacrylat, 1,3-Butylenglykoldiacrylat, 1,4-Butylenglykoldiacrylate und Ethylenglykoldimethacrylat, 1,2-Propylenglykoldimethacrylat, 1,3-Propylenglykoldimethacrylat, 1,3-Butylenglykoldimethacrylat, 1,4-Butylenglykoldimethacrylat sowie Divinylbenzol, Vinylmethacrylat, Vinylacrylat, Allylmethacrylat, Allylacrylat, Diallylmaleat, Diallylfumarat, Methylenbisacrylamid, Cyclopentadienylacrylat, Triallylcyanurat oder Triallylisocyanurat. In diesem Zusammenhang von besonderer Bedeutung sind auch die Methacrylsäure- und Acrylsäure-C₁-C₈-Hydroxyalkylester wie n-Hydroxyethyl-, n-Hydroxypropyl- oder n-Hydroxybutylacrylat und -methacrylat sowie Verbindungen, wie Diacetonacrylamid und Acetylacetoxyethylacrylat bzw. -methacrylat. Häufig werden die vorgenannten Monomeren in Mengen von bis 10 zu Gew.-%, bevorzugt jedoch in Mengen von weniger als 5 Gew.-%, jeweils bezogen auf die Gesamtmonomerenmenge, eingesetzt.

Erfindungsgemäß besonders gut herstellbare wässrige Polymerisatdispersionen sind solche, deren Polymerisate
- 50 bis 99,9 Gew.-% Ester der Acryl- und/oder Methacrylsäure mit 1 bis 12 C-Atome aufweisenden Alkanolen oder Styrol, oder
- 50 bis 99,9 Gew.-% Styrol und Butadien, oder
- 50 bis 99,9 Gew.-% Vinylchlorid und/oder Vinylidenchlorid, oder
- 40 bis 99,9 Gew.-% Vinylacetat, Vinylpropionat und/oder Ethylen
in einpolymerisierter Form enthalten.

Insbesondere vorteilhaft sind erfindungsgemäß solche wässrigen Polymerisatdispersionen herstellbar, deren Polymerisate
- 0,1 bis 5 Gew.-% wenigstens eine 3 bis 6 C-Atome aufweisende α,β-monoethylenisch ungesättigte Mono- und/oder Dicarbonsäure und/oder deren Amid und
   50 bis 99,9 Gew.-% wenigstens ein Ester der Acryl- und/oder Methacrylsäure mit 1 bis 12 C-Atome aufweisenden Alkanolen oder Styrol, oder
- 0,1 bis 5 Gew.-% wenigstens eine 3 bis 6 C-Atome aufweisende α,β-monoethylenisch ungesättigte Mono- und/oder Dicarbonsäure und/oder deren Amid und
   50 bis 99,9 Gew.-% Styrol und Butadien, oder
- 0,1 bis 5 Gew.-% wenigstens eine 3 bis 6 C-Atome aufweisende α,β-monoethylenisch ungesättigte Mono- und/oder Dicarbonsäure und/oder deren Amid und
   50 bis 99,9 Gew.-% Vinylchlorid und/oder Vinylidenchlorid, oder
- 0,1 bis 5 Gew.-% wenigstens eine 3 bis 6 C-Atome aufweisende α,β-monoethylenisch ungesättigte Mono- und/oder Dicarbonsäure und/oder deren Amid und
   40 bis 99,9 Gew.-% Vinylacetat, Vinylpropionat und/oder Ethylen

in einpolymerisierter Form enthalten.

Das erfindungsgemäße Verfahren wird in der Regel in Gegenwart von 0,1 bis 5 Gew.-%, vorzugsweise 0,1 bis 4 Gew.-% und insbesondere 0,1 bis 3 Gew.-%, jeweils bezogen auf die Gesamtmonomerenmenge, eines radikalischen Polymerisationsinitiators (Radikalinitiator) durchgeführt. Als Radikalinitiatoren kommen alle diejenigen in Betracht, die in der Lage sind, eine radikalische wässrige Emulsionspolymerisation auszulösen. Es kann sich dabei prinzipiell sowohl um Peroxide als auch um Azoverbindungen handeln. Selbstverständlich kommen auch Redoxinitiatorsysteme in Betracht. Als Peroxide können prinzipiell anorganische Peroxide, wie Wasserstoffperoxid oder Peroxodisulfate, wie die Mono- oder Di-Alkalimetall- oder Ammoniumsalze der Peroxodischwefelsäure, wie beispielsweise deren Mono- und Di-Natrium-, -Kalium- oder Ammoniumsalze oder organische Peroxide, wie Alkylhydroperoxide, beispielsweise tert.-Butyl-, p-Mentyl- oder Cumylhydroperoxid, sowie Dialkyl- oder Diarylperoxide, wie Di-tert.-Butyl- oder Di-Cumylperoxid eingesetzt werden. Als Azoverbindung finden im wesentlichen 2,2'-Azobis(isobutyronitril), 2,2'-Azobis(2,4-dimethylvaleronitril) und 2,2'-Azobis(amidinopropyl)dihydrochlorid (AIBA, entspricht V-50 von Wako Chemicals) Verwendung. Selbstverständlich können auch sogenannte Redoxinitiatorensysteme als Radikalinitiatoren eingesetzt werden. Als Oxidationsmittel für Redoxinitiatorsysteme kommen im wesentlichen die oben genannten Peroxide in Betracht. Als entsprechende Reduktionsmittel können Schwefelverbindungen mit niedriger Oxidationsstufe, wie Alkalisulfite, beispielsweise Kalium- und/oder Natriumsulfit, Alkalihydrogensulfite, beispielsweise Kalium- und/oder Natriumhydrogensulfit, Alkalimetabisulfite, beispielsweise Kalium- und/oder Natriummetabisulfit, Formaldehydsulfoxylate, beispielsweise Kalium- und/oder Natriumformaldehydsulfoxylat, Alkalisalze, speziell Kalium- und/oder Natriumsalze aliphatische Sulfinsäuren und Alkalimetallhydrogensulfide, wie beispielsweise Kalium- und/oder Natriumhydrogensulfid, Salze mehrwertiger Metalle, wie Eisen-(II)-sulfat, Eisen-(II)-Ammoniumsulfat, Eisen-(II)-phosphat, Endiole, wie Dihydroxymaleinsäure, Benzoin und/oder Ascorbinsäure sowie reduzierende Saccharide, wie Sorbose, Glucose, Fructose und/oder Dihydroxyaceton eingesetzt werden.

Üblicherweise werden im Rahmen des erfindungsgemäßen Verfahrens Dispergierhilfsmittel mitverwendet, die sowohl die Monomerentröpfchen als auch Polymerisatteilchen in der wässrigen Phase dispers verteilt halten und so die Stabilität der erzeugten wässrigen Polymerisatdispersionen gewährleisten. Als solche kommen sowohl die zur Durchführung von radikalischen wässrigen Emulsionspolymerisationen üblicherweise eingesetzten Schutzkolloide als auch Emulgatoren in Betracht.

Geeignete Schutzkolloide sind beispielsweise Polyvinylalkohole, Cellulosederivate oder Vinylpyrrolidon enthaltende Copolymerisate. Eine ausführliche Beschreibung weiterer geeigneter Schutzkolloide findet sich in Houben-Weyl, Methoden der organischen Chemie, Band XIV/1, Makromolekulare Stoffe, Seiten 411 bis 420, Georg-Thieme-Verlag, Stuttgart, 1961. Selbstverständlich können auch Gemische aus Emulgatoren und/oder Schutzkolloiden verwendet werden. Vorzugsweise werden als Dispergierhilfsmittel ausschließlich Emulgatoren eingesetzt, deren relative Molekulargewichte im Unterschied zu den Schutzkolloiden üblicherweise unter 1000 liegen. Sie können sowohl anionischer, kationischer oder nichtionischer Natur sein. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Im allgemeinen sind anionische Emulgatoren untereinander und mit nichtionischen Emulgatoren verträglich. Desgleichen gilt auch für kationische Emulgatoren, während anionische und kationische Emulgatoren meistens nicht miteinander verträglich sind. Gebräuchliche Emulgatoren sind z.B. ethoxilierte Mono-, Di- und Tri-Alkylphenole (EO-Grad: 3 bis 50, Alkylrest: C₄ bis C₁₂), ethoxilierte Fettalkohole (EO-Grad: 3 bis 50; Alkylrest: C₈ bis C₃₆) sowie Alkalimetall- und Ammoniumsalze von Alkylsulfaten (Alkylrest: C₈ bis C₁₂), von Schwefelsäurehalbestern ethoxylierter Alkanole (EO-Grad: 4 bis 30, Alkylrest: C₁₂ bis C₁₈) und ethoxilierter Alkylphenole (EO-Grad: 3 bis 50, Alkylrest: C₄ bis C₁₂), von Alkylsulfonsäuren (Alkylrest: C₁₂ bis C₁₈) und von Alkylarylsulfonsäuren (Alkylrest: C₉ bis C₁₈). Weitere geeignete Emulgatoren finden sich in Houben-Weyl, Methoden der organischen Chemie, Band XIV/1, Makromolekulare Stoffe, Seiten 192 bis 208, Georg-Thieme-Verlag, Stuttgart, 1961.

Als grenzflächenaktive Substanzen haben sich ferner Verbindungen der allgemeinen Formel I 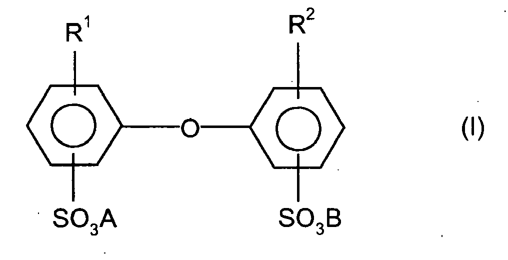 worin R¹ und R² C₄- bis C₂₄-Alkyl bedeuten und einer der Reste R¹ oder R² auch für Wasserstoff stehen kann, und A und B Alkalimetallionen und/oder Ammoniumionen sein können, erwiesen. In der allgemeinen Formel I bedeuten R¹ und R² bevorzugt lineare oder verzweigte Alkylreste mit 6 bis 18 C-Atomen, insbesondere mit 6, 12 und 16 C-Atomen oder H-Atome, wobei R¹ und R² nicht beide gleichzeitig H-Atome sind. A und B sind bevorzugt Natrium-, Kalium -oder Ammoniumionen, wobei Natriumionen besonders bevorzugt ist. Besonders vorteilhaft sind Verbindungen I, in denen A und B Natriumionen, R¹ ein verzweigter Alkylrest mit 12 C-Atomen und R² ein H-Atom oder R¹ sind. Häufig werden technische Gemische verwendet, die einen Anteil von 50 bis 90 Gew.-% des monoalkylierten Produktes aufweisen, beispielsweise Dowfax^{®} 2A1 (Marke der Dow Chemical Company). Die Verbindungen I sind allgemein bekannt, z.B: aus US-A 4 269 749, und im Handel erhältlich.

Selbstverständlich eignen sich die vorgenannten Dispergierhilfsmittel ganz generell zur Durchführung des erfindungsgemäßen Verfahrens. Das erfindungsgemäße Verfahren umfasst aber auch die Herstellung wässriger Polymerisatdispersionen von selbstemulgierenden Polymerisaten, bei denen Monomere, die ionische Gruppen aufweisen, aufgrund einer Abstoßung von Ladungen gleichen Vorzeichens die Stabilisierung bewirken.

Bevorzugt werden für das erfindungsgemäße Verfahren nichtionische und/oder anionische Dispergierhilfsmittel verwendet. Es können jedoch auch kationische Dispergierhilfsmittel eingesetzt werden.

In der Regel beträgt die Menge an eingesetztem Dispergierhilfsmittel 0,1 bis 5 Gew.-%, bevorzugt 1 bis 3 Gew.-%, jeweils bezogen auf die Gesamtmenge der radikalisch zu polymerisierenden ethylenisch ungesättigten Monomeren. Häufig ist es günstig, wenn eine Teil- oder die Gesamtmenge des Dispergierhilfsmittels dem fluiden Reaktionsmedium vor der Initiierung der radikalischen Polymerisation zugeführt wird. Darüber hinaus kann eine Teil- oder die Gesamtmenge des Dispergierhilfsmittels dem wässrigen Reaktionsmedium vorteilhaft auch gemeinsam mit dem wenigstens einen Monomeren, insbesondere in Form einer wässrigen Monomerenemulsion während der Polymerisation zugeführt werden.

Radikalkettenübertragende Verbindungen werden üblicherweise eingesetzt, um das Molekulargewicht der durch eine radikalisch wässrige Emulsionspolymerisation zugänglichen Polymerisate zu reduzieren bzw. zu kontrollieren. Dabei kommen im wesentlichen aliphatische und/oder araliphatische Halogenverbindungen, wie beispielsweise n-Butylchlorid, n-Butylbromid, n-Butyljodid, Methylenchlorid, Ethylendichlorid, Chloroform, Bromoform, Bromtrichlormethan, Dibromdichlormethan, Tetrachlorkohlenstoff, Tetrabromkohlenstoff, Benzylchlorid, Benzylbromid, organische Thioverbindungen, wie primäre, sekundäre oder tertiäre aliphatische Thiole, wie beispielsweise E-thanthiol, n-Propanthiol, 2-Propanthiol, n-Butanthiol, 2-Butanthiol, 2-Methyl-2-propanthiol, n-Pentanthiol, 2-Pentanthiol, 3-Pentanthiol, 2-Methyl-2-butanthiol, 3-Methyl-2-butanthiol, n-Hexanthiol, 2-Hexanthiol, 3-Hexanthiol, 2-Methyl-2-pentanthiol, 3-Methyl-2-pentanthiol, 4-Methyl-2-pentanthiol, 2-Methyl-3-pentanthiol, 3-Methyl-3-pentanthiol, 2-Ethylbutanthiol, 2-Ethyl-2-butanthiol, n-Heptanthiol und seine isomeren Verbindungen, n-Octanthiol und seine isomeren Verbindungen, n-Nonanthiol und seine isomeren Verbindungen, n-Decanthiol und seine isomeren Verbindungen, n-Undecanthiol und seine isomeren Verbindungen, n-Dodecanthiol und seine isomeren Verbindungen, n-Tridecanthiol und seine isomeren Verbindungen, substituierte Thiole, wie beispielsweise 2-Hydroxyethanthiol, aromatische Thiole, wie Benzolthiol, ortho-, meta-, oder para-Methylbenzolthiol, sowie alle weiteren im Polymerhandbook 3rd edtition, 1989, J. Brandrup und E.H. Immergut, John Weley & Sons, Abschnitt II, Seiten 133 bis 141, beschriebenen Schwefelverbindungen, aber auch aliphatische und/oder aromatische Aldehyde, wie Acetaldeyhd, Propionaldehyd und/oder Benzaldehyd, ungesättigte Fettsäuren, wie Ölsäure, Diene mit nicht konjugierten Doppelbindungen, wie Divinylmethan oder Vinylcyclohexan oder Kohlenwasserstoffe mit leicht abstrahierbaren Wasserstoffatomen, wie beispielsweise Toluol, zum Einsatz. Es ist aber auch möglich, Gemische sich nicht störender vorgenannter radikalkettenübertragender Verbindungen einzusetzen.

Die im erfindungsgemäßen Verfahren optional eingesetzte Gesamtmenge der radikalkettenübertragenden Verbindungen, bezogen auf die Gesamtmenge der zu polymerisierenden Monomeren, ist in der Regel ≤ 5 Gew.-%, oft ≤ 3 Gew.-% und häufig ≤ 1 Gew.-%.

Neben der saatfreien Herstellungsweise kann zur Einstellung der Polymerisatteilchengröße die Emulsionspolymerisation nach dem Saatlatex-Verfahren oder in Gegenwart eines in situ hergestellten Saatlatex erfolgen. Verfahren hierzu sind dem Fachmann bekannt und können dem Stand der Technik entnommen werden (siehe beispielsweise EP-B 40 419, EP-A 567 812, EP-A 614 922 sowie 'Encyclopedia of Polymer Science and Technology', Vol. 5, Seite 847, John Wiley & Sons Inc., New York, 1966). So empfiehlt der Stand der Technik, beim semikontinuierlichen Zulaufverfahren eine definierte feinteilige Saat-Polymerisatdispersion im Polymerisationsgefäß vorzulegen und dann das wenigstens eine Monomere in Gegenwart des Saatlatices zu polymerisieren. Hierbei wirken die Saat-Polymerisatteilchen als 'Polymerisationskeime' und entkoppeln die Polymersatteilchenbildung und das Polymerisatteilchenwachstum. Während der Emulsionspolymerisation kann weitere Saatlatex direkt in den Polymerisationsreaktor zugegeben werden. Hierdurch werden breite Größenverteilungen der Polymerisatteilchen erreicht, die insbesondere bei Polymerisatdispersionen mit hohem Feststoffgehalt oftmals erwünscht sind (vgl. hierzu beispielsweise DE-A 4213965). Anstelle der Zugabe eines definierten Saatlatices kann dieser auch in situ erzeugt werden. Hierzu wird beispielsweise eine Teilmenge des wenigstens einen Monomeren und des Radikalinitiators zusammen mit einer Teil- oder der Gesamtmenge des Emulgators vorgelegt und auf Reaktionstemperatur erwärmt, wobei eine relativ feinteilige Polymersaat entsteht. Anschließend wird im gleichen Polymerisationsgefäß die eigentliche Polymerisation nach dem Zulaufverfahren durchgeführt (siehe auch DE-A 4213965).

Als Reaktionstemperatur für das erfindungsgemäße Verfahren kommt der gesamte Bereich von 0 bis 170 °C in Betracht; Temperaturen von 70 bis 120 °C, vorzugsweise 80 bis 100 °C und besonders bevorzugt 85 bis 100 °C werden jedoch bevorzugt angewendet. Die radikalische wässrige Emulsionspolymerisation kann bei einem Druck kleiner, gleich oder größer 1 atm (absolut) durchgeführt werden, so dass die Polymerisationstemperatur 100 °C übersteigen und bis zu 170 °C betragen kann. Vorzugsweise werden leichtflüchtige Monomere wie Ethylen, Butadien oder Vinylchlorid unter erhöhtem Druck polymerisiert. Dabei kann der Druck 1,2, 1,5, 2, 5, 10, 15 bar oder noch höhere Werte einnehmen. Werden Emulsionspolymerisationen im Unterdruck durchgeführt, werden Drücke von 950 mbar, häufig von 900 mbar und oft 850 mbar (absolut) eingestellt. Vorteilhaft wird die radikalische wässrige Emuslionspolymerisation bei 1 atm (= Atmosphärendruck) unter Inertgasatmosphäre, wie beispielsweise unter Stickstoff oder Argon durchgeführt.

Erfindungswesentlich ist, dass die wässrige Polymerisatdispersion mit einem Polymerisatfeststoffgehalt X+Y Gew.-% hergestellt wird, der um Y Gew.-% höher ist, als der gewünschte Polymerisatfeststoffgehalt von X Gew.-%, mit welchem die wässrige Polymerisatdispersion an Kunden abgegeben bzw. selbst weiterverarbeitet wird.

Dabei kann X ein Wert von ≥ 1 und ≤ 80 sein. Häufig ist X ein Wert ≥ 5, ≥ 10, ≥ 15, ≥ 20, ≥ 25, ≥ 30, ≥ 35, ≥ 40, ≥ 45, ≥ 50, ≥ 55, ≥ 60, ≥ 65, ≥ 70 oder ≤ 75, ≤ 70, ≤ 65, ≤ 60, ≤ 55 oder ≤ 50 und alle Werte dazwischen. Vorteilhaft beträgt der Wert X ≥ 30 und ≤ 70 und insbesondere vorteilhaft ≥ 40 und ≤ 60. Mit besonderem Vorteil ist X gleich 50.

Erfindungsgemäß ist Y ein Wert ≥ 0,01 und ≤ 50. Häufig ist Y ein Wert ≥ 0,03, ≥ 0,05, ≥ 0,10, ≥ 0,15, ≥ 0,20, ≥ 0,25, ≥ 0,30, ≥ 0,35, ≥ 0,40, ≥ 0,50, ≥ 1, ≥ 5, ≥ 10, ≥ 15, ≥ 20, ≥ 30, ≥ 40 oder ≤ 45, ≤ 40, ≤ 35, ≤ 30, ≤ 25, ≤ 20, ≤ 15, ≤ 10, ≤ 5, ≤ 3, ≤ 1, ≤ 0,5 oder ≤ 0,1 und alle Werte dazwischen. Vorteilhaft liegt der Wert Y im Bereich ≥ 0,1 und ≤ 15 und insbesondere vorteilhaft ≥ 0,25 und ≤ 10.

Im Rahmen dieser Schrift wird der Polymerisatfeststoffgehalt bestimmt, indem eine kleine Menge (ca. 3 bis 5 g) der wässrigen Polymerisatdispersion in einem Aluminiumtiegel mit einem Innendurchmesser von ca. 3 cm in einem Trockenschrank bei 140 °C bis zur Gewichtskonstanz getrocknet wird.

Nach Abschluss der Polymerisationsreaktion im Polymerisationsgefäß wird die erhaltene (konzentrierte) Polymerisatdispersion über eine Verbindungsleitung vollständig in einen weniger aufwendig ausgerüsteten Behälter entleert und das leere Polymerisationsgefäß, welches nur noch an den Wänden, Gefäßeinbauten und Rührer mit wässriger Polymerisatdispersion benetzt ist, mittels Wasser gespült/gereinigt und das dabei anfallende Spülwasser ebenfalls über die Verbindungsleitung dem Behälter zugeführt, wobei die im Behälter befindliche konzentrierte Polymerisatdispersion verdünnt wird.

Als Polymerisationsgefäße kommen alle Gefäße unterschiedlichster Größe und Form in Betracht, welche zur radikalisch initiierten wässrigen Emulsionspolymerisation eingesetzt werden können. Dabei ist es unerheblich, ob es sich hierbei beispielsweise um einen 2 I Glaskolben im Labormaßstab oder um einen 100 m³ Rührreaktor im Betriebsmaßstab handelt.

Unter Behältern werden in dieser Schrift Reaktoren, Rührkessel, Zwischen- und Lagerbehälter, aber auch Container, Fässer, Kanister und Dosen etc. unterschiedlichster Größe und Form verstanden.

Selbstverständlich umfasst das erfindungsgemäße Spülen des Polymerisationsgefäßes auch das Spülen der Verbindungsleitung zwischen Polymerisationsgefäß und Behälter, durch welche die wässrige Polymerisatdispersion vom Polymerisationsgefäß in den Behälter überführt wurde.

Dabei ist es unerheblich, aus welchem Material die Polymerisationsgefäße, die Verbindungsleitungen oder die Behälter aufgebaut sind. Zum Einsatz kommen beispielsweise verschiedenste legierte und unlegierte Qualitätsstähle, chemisch beständige Edelstahlsorten, wie 1.4541-, und 1.4571-Stahl, aber auch Aluminium, die gegebenenfalls mit unterschiedlichsten Innenbeschichtungen, wie Emaille, Silber, Zink und Zinn oder Kunststoffen, wie beispielsweise PTFE und Lacken versehen sein können oder Kunststoffe, wie beispielsweise Polyethylen, Polypropylen, Polystyrol, Polyacrylamid und glasfaserverstärkte Kunstharze. Die Polymerisationsgefäße und Behälter können unterschiedlichste Einbauten, wie beispielsweise Rührer, Wärmetauscher, Heiz- und/oder Kühlschlangen, Strömungsbrecher und Messfühler, aber auch verschiedenste Anschlüsse und Öffnungen, die gegebenenfalls durch Verschlüsse, wie Kugelhähne, Ventile unterschiedlichster Bauart sowie Schraubdeckel etc. verschließbar sind, enthalten.

Im vorliegenden erfindungsgemäßen Verfahren wird zum Spülen bzw. Reinigen des Polymerisationsgefäßes Wasser, bevorzugt Trinkwasser und insbesondere bevorzugt Wasserdampfkondensat oder entionisiertes Wasser verwendet. Dabei ist es erfindungsgemäß möglich, dass die Gesamtmenge des Spül/Reinigungswassers so bemessen wird, dass der Polymerisatfeststoffgehalt von X+Y Gew.-% auf X Gew.-% reduziert wird. Dies ist insbesondere dann der Fall, wenn die wässrige Polymerisatdispersion nach Verdünnung ohne weitere Nachbehandlung an den Kunden abgegeben wird. Es ist aber auch möglich, dass die Gesamtmenge des Spül/Reinigungswassers kleiner ist als die zur Verdünnung der wässrigen Polymerisatdispersion auf X Gew.-% erforderliche Menge. Dies ist insbesondere dann der Fall, wenn die wässrige Polymerisatdispersion aus einen Polymerisationsansatz oder mehrere, gesammelte wässrige Polymerisatdispersionen, einem Nachbehandlungsschritt, beispielsweise der Nachpolymerisation bzw. der Entfernung leichtflüchtiger organischer Bestandteile oder der Additivierung mit weiteren Hilfsstoffen, beispielsweise bioziden Wirkstoffen oder Antischaummitteln, unterzogen wird. In diesem Fall wird das Spül/Reinigungswasser zwar zur Verdünnung der (gesammelten) wässrigen Polymerisatdispersion(en) verwendet, die Endeinstellung des Polymerisatfeststoffgehaltes auf X Gew.-% erfolgt dann aber erst nach Abschluss des Nachbehandlungsschrittes mit klarem, insbesondere entionisiertem und polymerisatfreien Wasser.

Im Rahmen des erfindungsgemäßen Verfahrens ist es möglich, das Polymerisationsgefäß einmal mit der Gesamtmenge oder mehrmals mit Teilmengen des Spül/Reinigungswassers zu spülen. Auch die Spülung des Polymerisationsgefäßes an sich ist unkritisch und erfolgt beispielsweise mit fest installierten oder temporär eingesetzten Wassersprühköpfen. Selbstverständlich ist es auch möglich, die Teil- oder die Gesamtmenge des Spül/Reinigungswassers im entleerten Polymerisationsgefäß vorzulegen, und die Reinigung/Spülung durch Umpumpen des Wassers oder durch Inbetriebnahme des Rührers zur bewirken. Dabei ist die Temperatur des Spül/Reinigungswassers unkritisch. Vorteilhaft liegt sie im Bereich von 5 bis 60 °C.

Mit besonderem Vorteil wird das erfindungsgemäße Verfahren angewendet, wenn im Polymerisationsgefäß die ethylenisch ungesättigten Monomeren bis zu einem Umsatz von ≥ 95 Gew.-%, vorteilhaft ≥ 98 Gew.-% und insbesondere vorteilhaft ≥ 99 Gew.-% umgesetzt werden (sogenannte Hauptpolymerisation) und die dabei erhaltene wässrige Polymerisatdispersion im Behälter einer Nachbehandlung zur Reduzierung des Restmonomerengehalts unterzogen wird. Dabei erfolgt die Nachbehandlung entweder chemisch, beispielsweise durch Vervollständigung der Polymerisationsreaktion durch Einsatz eines effektiveren Radikalinitiatorensystems (sogenannte Nachpolymerisation) und/oder physikalisch, beispielsweise durch Strippung der wässrigen Polymerisatdispersion mit Wasserdampf oder Inertgas. Entsprechende chemische und/oder physikalische Methoden sind dem Fachmann geläufig [siehe beispielsweise EP-A 771328, DE-A 19624299, DE-A 19621027, DE-A 19741184, DE-A 19741187, DE-A 19805122, DE-A 19828183, DE-A 19839199, DE-A 19840586 und 19847115]. Dabei bietet die Kombination aus chemischer und physikalischer Nachbehandlung den Vorteil, dass neben den nicht umgesetzten ethylenisch ungesättigten Monomeren, auch noch andere störende leichtflüchtige organischen Bestandteile (die sogenannten VOCs [volatile organic compounds]) aus der wässrigen Polymerisatdispersion entfernt werden.

Durch das vorliegende erfindungsgemäße Verfahren lassen sich Polymerisatausbeuteverluste bei der radikalisch initiierten wässrigen Emulsionspolymerisation minimieren. Darüber hinaus weisen die erhaltenen wässrigen Polymerisatdispersionen geringere Koagulatgehalte auf, weshalb sich die wässrigen Polymerisatdispersionen insbesondere als Bindemittel in Klebstoffen, Dichtmassen, Kunststoffputzen, Papierstreichmassen und Anstrichmitteln, zur Ausrüstung von Leder und Textilien, zur Faserbindung sowie zur Modifizierung von mineralischen Bindemitteln einsetzen lassen. Desweiteren lässt sich mit dem erfindungsgemäßen Verfahren - insbesondere im technischen Produktionsmaßstab - die Polymerisatkapazität bei gegebenen Polymerisationsgefäßen erhöhen.

Folgendes Beispiel soll die Erfindung erläutern.

### Beispiel

In einem sauberen und trockenen 5 I Edelstahldruckreaktor, ausgerüstet mit einem MIG-Rührer und 4 Dosiereinrichtungen, einer Zulaufleitung mit Sprühdüse im Deckel sowie einer Ablaufleitung aus Edelstahl im Boden des Druckreaktors, wurden bei 20 bis 25 °C (Raumtemperatur) und unter Stickstoffatmosphäre 800 g entionisiertes Wasser, 100 g einer wässrigen Polystyrolsaat (Feststoffgehalt 33 Gew.-%, zahlenmittlerer Teilchendurchmesser 32 nm), 10 g Acrylsäure, 50 g einer 7 gew.-%igen Natriumpersulfatlösung, 45 g Styrol, 9 g einer 15 gew.-%igen wässrigen Natriumdodecylsulfat-Lösung vorgelegt. Anschließend wurde der Reaktorinhalt unter Rühren auf 95 °C aufgeheizt. Nach Erreichen von 95 °C wurden zeitgleich beginnend die Gesamtmengen an Zulauf 1 und Zulauf 2 innerhalb von 4 Stunden kontinuierlich mit gleichbleibenden Mengenströmen zudosiert. Daran anschließend ließ man den Reaktorinhalt noch 1 Stunde bei 95 °C nachreagieren. Danach startete man zeitgleich die Zuläufe 3 und 4 und dosierte beide Zuläufe innerhalb von 2 Stunden kontinuierlich mit gleichbleibenden Mengenströmen. Danach kühlte man den Reaktionsansatz auf Raumtemperatur ab und entspannte den Druckbehälter auf Atmosphärendruck.

| | |
|---|---|
| Zulauf 1: | |
| homogene Emulsion aus | |
| 1000 g | Styrol |
| 900 g | 1,3-Butadien |
| 100 g | Acrylsäure |
| 10 g | trans-Aconitsäure |
| 400 g | entionisiertes Wasser |
| 10 g | einer 25 gew.-%igen wässrigen Natriumhydroxid-Lösung |
| 20 g | tert.-Dodecylcmercaptan und |
| 70 g | einer 15 gew.-%igen wässrigen Natriumdodecylsulfat-Lösung |
| | |
| Zulauf 2: | |
| 450 g | einer 4 gew.-%igen wässrigen Natriumpersulfat-Lösung |
| | |
| Zulauf 3: | |
| 45 g | einer 10 gew.-%igen wässrigen Lösung von tert.-Butylhydroperoxid |
| | |
| Zulauf 4: | |
| 60 g | einer 10 gew.-%igen wässrigen Lösung von Acetonbisulfit (molares 1:1-Additionsprodukt aus Aceton und Natriumhydrogensulfit) |

Über die Ablaufleitung am Boden des Druckreaktors wurde die erhaltene wässrige Polymerisatdispersion innerhalb von 15 Minuten vollständig in einen 25 I Mischbehälter entleert, welcher unterhalb des Druckbehälters angeordnet war. Daran anschließend wurden bei Raumtemperatur über die Zulaufleitung im Deckel des Druckreaktors 200 g entionisiertes Wasser mit einem Druck von 3 bar über die Sprühdüse in den Druckreaktor eingedüst. Die Edelstahlsprühdüse war scheibenförmig ausgebildet, hatte eine Höhe von ca. 0,7 cm, einen Durchmesser von ca. 3 cm und 6 horizontale 0,7 mm-Sprühöffnungen, welche gleichmäßig über die ringförmige seitliche Außenfäche der Edelstahlscheibe (d.h. im 60°-Winkelabstand) verteilt angeordnet waren. Nachdem das entionisierte Wasser eingedüst worden war, ließ man noch 1 Minute nachlaufen und entleerte dann den Druckreaktor erneut in den Mischbehälter, wobei darauf geachtet wurde, dass auch die Ablaufleitung entleert wurde.

In den so nachgespülten Druckbehälter wurden bei Raumtemperatur und unter Stickstoffatmosphäre erneut 800 g entionisiertes Wasser, 100 g einer wässrigen Polystyrolsaat (Feststoffgehalt 33 Gew.-%, zahlenmittlerer Teilchendurchmesser 32 nm), 10 g Acrylsäure, 50 g einer 7 gew.-%igen Natriumpersulfatlösung, 45 g Styrol, 9 g einer 15 gew.-%igen wässrigen Natriumdodecylsulfat-Lösung vorgelegt und, wie voran beschrieben, der nächste Polymerisationsansatz durchgeführt. Insgesamt erfolgten 5 Polymerisationsansätze mit nachfolgender Spülung mit entionisiertem Wasser.

Die so erhaltene wässrige Copolymerisatdispersion wies einen Feststoffgehalt von 49,5 Gew.-%, bezogen auf das Gesamtgewicht der wässrigen Dispersion, auf.

Durch Zugabe von 430 g entionisiertem Wasser wurde der Feststoffgehalt der wässrigem Polymerisatdispersion im Mischbehälter auf 45,0 Gew.-% eingestellt. Die Teilchengröße wurde zu 135 nm und der Koagulatgehalt zu 40 ppm bestimmt.

Die Feststoffgehalte wurden generell bestimmt, indem eine definierte Menge der jeweiligen wässrigen Copolymerisatdispersion (ca. 5 g) in einem Aluminiumtiegel mit einem Innendurchmesser von ca. 3 cm bei 140 °C in einem Trockenschrank bis zur Gewichtskonstanz getrocknet wurde. Es wurden jeweils zwei separate Messungen durchgeführt. Die in den Beispielen angegebenen Werte stellen den Mittelwert dieser beiden Messergebnisse dar.

Die mittleren Teilchendurchmesser der Copolymerisatteilchen wurden generell durch dynamische Lichtstreuung an einer 0,005 bis 0,01 gewichtsprozentigen wässrigen Copolymerisatdispersion bei 23 °C mittels eines Autosizer IIC der Fa. Malvern Instruments, England, ermittelt. Angegeben wird der mittlere Durchmesser der Kumulantenauswertung (cumulant z-average) der gemessenen Autokorrelationsfunktion (ISO-Norm 13321).

Die Koagulatgehalte wurden generell ermittelt, indem 2 kg der im Mischbehälter erhaltenen wässrigen Polymerisatdispersion über ein Polyamidgewebe mit einer Maschenweite von 125 µm filtriert wurden, der Filterrückstand mit 100 ml entionisiertem Wasser gewaschen und anschließend 1 Stunde bei 120 °C getrocknet wurde. Das Polyamidgewebe wurde vor der Filtration und nach der Trocknung bei Raumtemperatur gewogen und aus der Gewichtsdifferenz die Koagulatgehalte in ppm errechnet.

### Vergleichsbeispiel

Die Durchführung des Vergleichsbeispiels erfolgte analog dem Beispiel mit den Unterschieden, dass die Vorlage mit 900 g und Zulauf 1 mit 500 g entionisiertem Wasser beschickt wurde und nach der Entleerung des Druckreaktors keine Spülung mit entionisiertem Wasser erfolgte.

Die so erhaltene wässrige Copolymerisatdispersion wies einen Feststoffgehalt von 45,1 Gew.-%, bezogen auf das Gesamtgewicht der wässrigen Dispersion, auf. Die Teilchengröße wurde zu 138 nm und der Koagulatgehalt zu 110 ppm bestimmt.

## Patentansprüche

1. Verfahren zur Herstellung einer wässrigen Polymerisatdispersion mit einem Polymerisatfeststoffgehalt von X Gew.-% durch radikalisch initiierte wässrige Emulsionspolymerisation in einem Polymerisationsgefäß, **dadurch gekennzeichnet, dass** im Polymerisationsgefäß durch die radikalisch initiierte wässrige Emulsionspolymerisation eine wässrige Polymerisatdispersion mit einem Polymerisatfeststoffgehalt von X+Y Gew.-% hergestellt wird, diese wässrige Polymerisatdispersion in einen Behälter überführt wird, das Polymerisationsgefäß mit Wasser gespült wird und das erhaltene Spülwasser zur Verdünnung der wässrigen Polymerisatdispersion im Behälter auf einen Feststoffgehalt von X Gew.-% verwendet wird.

2. Verfahren nach Anspruch 1, **dadurch gekennzeichnet, dass** das Polymerisat
| | |
|---|---|
| 50 bis 99,9 Gew.-% | Ester der Acryl- und/oder Methacrylsäure mit 1 bis 12 C-Atome aufweisenden Alkanolen oder Styrol, oder |
| | |
| 50 bis 99,9 Gew.-% | Styrol und Butadien, oder |
| | |
| 50 bis 99,9 Gew.-% | Vinylchlorid und/oder Vinylidenchlorid, oder |
| | |
| 40 bis 99,9 Gew.-% | Vinylacetat, Vinylpropionat und/oder Ethylen |
in einpolymerisierter Form enthält.

3. Verfahren nach Anspruch 1 oder 2, **dadurch gekennzeichnet, dass** die wässrige Polymerisatdispersion im Behälter einer Nachbehandlung zur Reduzierung des Restmonomerengehalts unterzogen wird.

4. Verfahren nach einem der Ansprüche 1 bis 3, **dadurch gekennzeichnet, dass** X ≥ 40 und ≤ 60 und Y ≥ 0,1 ist.

## Claims

1. A process for preparing an aqueous polymer dispersion having a polymer solids content of X% by weight by free-radically initiated aqueous emulsion polymerization in a polymerization vessel, which comprises preparing an aqueous polymer dispersion with a polymer solids content of X + Y% by weight by the free-radically initiated aqueous emulsion polymerization in the polymerization vessel, transferring this aqueous polymer dispersion to a receiver, flushing the polymerization vessel with water and using the resulting flush water to dilute the aqueous polymer dispersion in the receiver to a solids content of X% by weight.

2. The process according to claim 1, wherein the polymer comprises, in copolymerized form,
| | |
|---|---|
| from 50 to 99.9% by weight of | esters of acrylic acid and/or methacrylic acid with alkanols having from 1 to 12 carbon atoms or styrene, or |
| | |
| from 50 to 99.9% by weight of | styrene and butadiene, or |
| | |
| from 50 to 99.9% by weight of | vinyl chloride and/or vinylidene chloride, or |
| | |
| from 40 to 99.9% by weight of | vinyl acetate, vinyl propionate and/or ethylene. |

3. The process according to claim 1 or 2, wherein the aqueous polymer dispersion in the receiver is subjected to an aftertreatment to reduce the residual monomer content.

4. The process according to any of claims 1 to 3, wherein X ≥ 40 and ≤ 60 and Y ≥ 0.1.

## Revendications

1. Procédé pour la préparation d'une dispersion aqueuse de polymère ayant une teneur en matière solide de polymère de X % en poids, par polymérisation en émulsion aqueuse à amorçage radicalaire dans un récipient de polymérisation, **caractérisé en ce qu'**on prépare dans le récipient de polymérisation, par la polymérisation en émulsion aqueuse à amorçage radicalaire, une dispersion aqueuse de polymère ayant une teneur en matière solide de polymère de X+Y % en poids, on transfère cette dispersion aqueuse de polymère dans un récipient, on rince le récipient de polymérisation avec de l'eau et on utilise l'eau de rinçage obtenue pour la dilution de la dispersion aqueuse de polymère dans le récipient, jusqu'à une teneur en matière solide de X % en poids.

2. Procédé selon la revendication 1, **caractérisé en ce que** le polymère contient sous forme incorporée par polymérisation
| | |
|---|---|
| 50 à 99,9 % en poids | d'esters de l'acide acrylique et/ou de l'acide méthacrylique avec des alcanols comportant de 1 à 12 atomes de carbone ou de styrène, ou |
| | |
| 50 à 99,9 % en poids | de styrène et butadiène, ou |
| | |
| 50 à 99,9 % en poids | de chlorure de vinyle et/ou de chlorure de vinylidène, ou |
| | |
| 40 à 99,9 % en poids | d'acétate de vinyle, de propionate de vinyle et/ou d'éthylène. |

3. Procédé selon la revendication 1 ou 2, **caractérisé en ce que** la dispersion aqueuse de polymère est soumise dans le récipient à un post-traitement visant à réduire la teneur en monomères résiduels.

4. Procédé selon l'une quelconque des revendications 1 à 3, **caractérisé en ce que** X est ≥ 40 et ≤ 60 et Y est ≥ 0,1.
